# EUROPEAN PATENT SPECIFICATION

(11) **EP 1 780 852 B1**
(45) Date of publication and mention of the grant of the patent: **29.11.2017**
(21) Application number: 06122691.6
(22) Date of filing: 20.10.2006
(51) Int. Cl.: H02G 3/04

(54) **A fixation device for fixing electrical devices in an installation duct**
Befestigungsvorrichtung zum Fixieren von elektrischen Bauteilen in einem Kabelkanal
Dispositif de fixation pour fixer des appareillages électriques dans un conduit de câbles

(30) Priority: 27.10.2005 SE 0502377
(43) Date of publication of application: 02.05.2007
(73) Proprietor: Schneider Electric Industries SAS, 92500 Rueil-Malmaison (FR)
(72) Inventor: Chanaron, Pierre-Francois, 611 62 Nyköping (SE); Westlin, Stefan, 613 35 Oxelösund (SE); Karlsson, Sebastian, 611 31 Nyköping (SE)
(74) Representative: Groth & Co. KB

(56) References cited:
- EP-A- 0 957 551
- EP-A- 1 320 163
- EP-A- 1 357 652
- DE-A1- 2 204 221
- DE-U1- 29 909 946

## Description

### Technical Field

The present invention relates to a fixation device for fixing electrical devices in an installation duct, which installation duct has a longitudinal opening running in the longitudinal direction of the installation duct and being limited by two longitudinal edges, which fixation device comprises a bridge portion intended to, in a cross-direction, span said longitudinal opening, which bridge portion is provided with connecting portions arranged to be detachably attachable to said respective edges.

### Background of the Invention

Today, installation ducts are used to pull cables outside walls and ceilings and install electrical devices, for instance, sockets and operating devices, in, above all offices, laboratories, and hospital and workshop premises. Because the requirements of flexibility in design and equipment options as well as the replaceability of various electrical devices are increasing, also the risk of the installation duct being deformed increases because of the increased loading on the electrical devices installed in the installation duct. When said electrical devices are loaded, for instance, when an electrical plug is to be pulled out of a socket, also the installation duct, in which the socket is installed, is loaded. Because the installation duct is loaded by a force, it will be deformed, the sockets and the operating devices installed in the opening of the installation duct running the risk of starting to slide along the opening of the installation duct or, in the worst case, unintentionally come loose from it.

With previously known fixation devices, extensive work is required both to install the fixation device in the opening of the installation duct, and to remove and move the same fixation device. An additional disadvantage of previously known fixation devices is that they frequently are attached with screws in the installation duct, which requires some type of tool in order to install the fixation device in the installation duct. It has also been a problem to achieve sufficient friction between previously known fixation devices and the edges of the installation duct in order to prevent electrical devices from sliding along the opening of the installation duct upon loading.

Identified existing prior art is EP 0 957 551 which discloses a fixation device for an installation duct having a bridge portion with side legs attaching the installation duct.

### The Object of the Invention

Thus, the object of present invention is to provide an improved fixation device, which easily can be installed in and by a simple grip be withdrawn from the installation duct. Furthermore, the object is to provide a fixation device that fixes the longitudinal opening running in the longitudinal direction of the installation duct, the electrical devices being installed therein being prevented from sliding along the opening of the installation duct or even unintentionally come loose from it.

### Summary of the Invention

The above object is attained by the present invention such as it is defined in the independent claim 1. Suitable embodiments of the invention are defined in the dependent claims.

Thus, according to the present invention, a fixation device is defined for fixing electrical devices in an installation duct, which installation duct has a longitudinal opening running in the longitudinal direction of the installation duct and being limited by two longitudinal edges, which fixation device comprises a bridge portion intended to, in a cross-direction, span said longitudinal opening, which bridge portion is provided with connecting portions arranged to be detachably attachable to said respective edges, characterized in that each connecting portion of the bridge portion comprises clamping elements arranged to clamp the fixation device to said edges by means of a clamping force, which clamping elements are interconnected by a resilient element running basically parallel to said bridge portion, which resilient element can be brought toward the bridge portion to decrease said clamping force, thereby allowing movement of the fixation device in the longitudinal direction along the edges of the installation duct, and allowing loosening of the fixation device from said edges of the installation duct.

In accordance with the invention, the advantage is obtained that the clamping elements can be controlled by the resilient element to allow the regulation of the clamping force of the clamping elements against the edges of the installation duct. Furthermore, because the clamping force easily can be regulated by the fact that a user, by means of a thumb/index-finger grip, can bring up the resilient element against the bridge portion, the additional advantage is obtained that no tools are required upon installation of the fixation device in and withdrawal of the same from the installation duct. By the fact that each connecting portion comprises a clamping element that clamps the fixation device to the edges of the installation duct, the fixation device is prevented from sliding along the opening of the installation duct, as well as from unintentionally coming loose from it. By preventing the fixation device from sliding along or even coming loose from the installation duct upon loading, in turn, the same prevents the electrical devices from sliding when they are loaded. Of course, it is also possible to install other types of devices in the installation duct. An example of such a device may be an empty box having a coverlid intended to accommodate, for instance, a circuitry.

According to an advantageous embodiment, a projection may be arranged on a surface of said resilient element, which faces said bridge portion so as to be able to reach said projection by means of an elongate tool, for instance a screwdriver, withdrawal of said fixation device from the installation duct being possible even if it is, for some reason, impossible to reach the surface of the resilient element facing away from the bridge portion. Of course, said projection may be T-shaped, or shaped as a cross, so as to be able to reach said projection from more than one direction.

According to an additional advantageous embodiment, the fixation device comprises a lid part, which is formed to be detachably attachable to said bridge portion. Said lid part is advantageously provided with legs, which in the installed position are arranged to provide a frictional force between said legs and the edges of the installation duct. Thanks to said frictional force, the general fixation of the fixation device in the installation duct improves, the electrical devices to a higher extent being blocked from sliding along the opening of the installation ducts. Furthermore, the lid part makes the aesthetic overall impression of the installation duct becoming better.

According to another advantageous embodiment, the lid part may comprise hitch elements in order to be attachable by snap action to said bridge portion. The advantage of this is that the lid part is fixed to the bridge portion in a better way, and thereby does not run the risk of unintentionally coming loose upon loading and due to external effects.

According to another advantageous embodiment, the lid part may comprise an elongate element, which is intended to be detachably attachable to said bridge portion. Said elongate element makes that the lid part is not lost if the lid part for some reason would come loose from the bridge portion. Of course, the lid part may comprise more than one elongate element intended to be detachably attachable to said bridge portion.

According to another advantageous embodiment, said bridge portion may comprise a groove and that said elongate element can run in said groove. Of course, said bridge portion may be provided with more than one groove.

According to another advantageous embodiment, the free end of said elongate element may be provided with hooks so as to be able to detachably hook on the elongate element to said bridge portion. Said hooks are most suitably hooked on in the bridge portion after the elongate element has been brought through said groove of the bridge portion. Naturally, the free end of the elongate element may be provided with an end member of another design than hooks.

### Brief Description of the Drawings

The invention will now be described closer by means of embodiment examples and reference being made to the accompanying drawings, wherein
Figure 1 shows a perspective view obliquely from above of an embodiment of the fixation device according to the present invention, having the lid part installed at the bridge portion,
Figure 2 shows a perspective view obliquely from above of the fixation device according to the present invention, having the lid part withdrawn from the bridge portion, but having the elongate element attached in a groove in the bridge portion, and
Figure 3 shows a perspective view from above of the bridge portion,
Figure 4 shows a perspective view from above of the lid part, having the four legs turned upward, and
Figure 5 shows a schematic view of the fixation device in Figure 1 installed in an installation duct.

### Detailed Description of the Invention

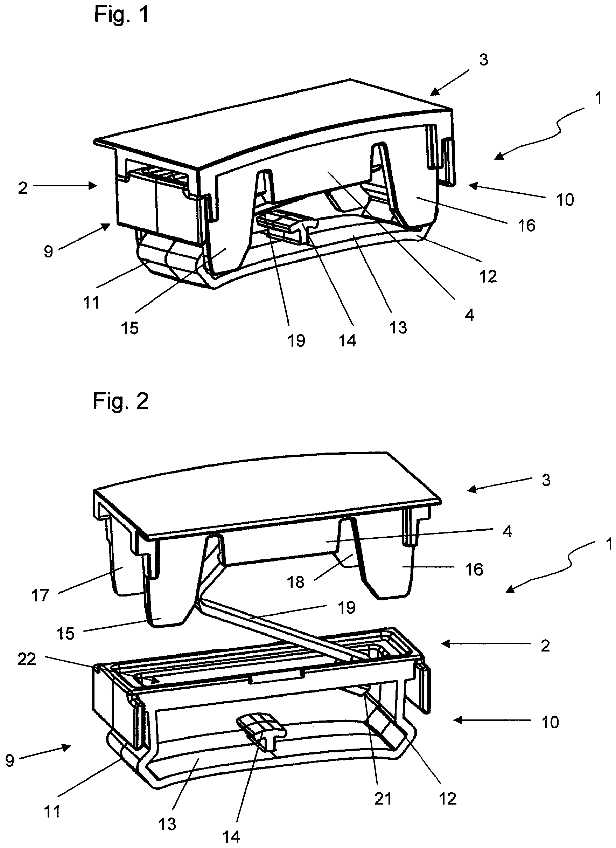

In Figures 1-5, an embodiment of present invention is shown, applied to a fixation device for fixing electrical devices in an installation duct. However, it should directly be emphasized that the invention is not in any way limited to this type of installation ducts, but may be applied to various installation ducts.

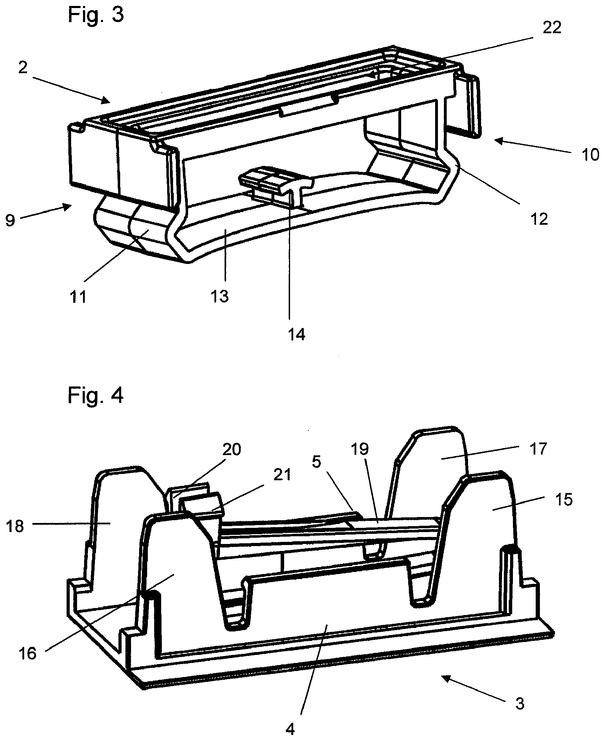

Figure 1 shows a perspective view obliquely from above of an embodiment of a fixation device according to the present invention. In this embodiment, the fixation device 1 comprises a bridge portion 2 and a lid part 3, which lid part 3 is detachably attached to the bridge portion 2 by means of two hitch elements 4, 5 (see Figure 4). The hitch elements 4, 5 are situated on either long side of the lid part 3. Said lid part 3 is attached to the bridge portion 2 by the fact that the hitch elements 4, 5 of the lid portion 3 snap around the elongate edges of the bridge portion 2. In order to allow attachment of the fixation device 1 to the edges 7, 8 of an installation duct 6, the bridge portion 2 is provided with connecting portions 9, 10, each one of which comprises a clamping element 11, 12. The clamping elements 11, 12 are intended to clamp the fixation device 1 to the edges 7, 8 of the installation duct 6 by means of a clamping force. In order to allow detachment of the fixation device 1 from the installation duct 6 and to allow movement of the same fixation device 1 along the opening of the installation duct 6, the clamping elements 11, 12 are interconnected by a resilient element 13 running basically parallel to the bridge portion 2. In order to loose the fixation device 1 from or move the same along the installation duct 6, the resilient element 13 is brought toward the bridge portion 2 to decrease the clamping force, the clamping elements 11, 12 being disengaged from the edges 7, 8 of the installation duct 6, thereby allowing movement or removal of the fixation device 1 from the edges 7, 8 of the installation duct 6. Upon occasions when it is difficult to reach the surface of the bridge portion 2 turned away from the lid part 3, it is possible to hook on an elongate tool in a projection 14 of the bridge portion 2. In Figures 1, 2, 3, 5, the projection 14 is T-shaped to allow access and withdrawal of the fixation device 1 from the installation duct 6 in two different directions. Furthermore, the lid part 3 comprises four legs 15, 16, 17, 18 (see Figures 2 and 4), which are placed two by two on either long side of the lid part 3. These legs 15, 16, 17, 18 are intended to provide a frictional force between the fixation device 1 and the edges 7, 8 of the installation duct 6. The friction between the fixation device 1 and the edges 7, 8 of the installation duct 6 should increase the resistance of the electrical devices against movement by virtue of forces applied parallel to the electrical devices.

In Figure 2, it is shown how an elongate element 19 of the lid part 3 is in engagement with the bridge portion 2. The free end of the elongate element 19 is provided with two hooks 20, 21 (see Figure 4), which are brought down into a groove 22 arranged in the bridge portion 2. The hooks 20, 21 make that the lid part 3 is not lost from the bridge portion 2 and furthermore that the lid part 3 is slidable along the groove 22 in the bridge portion 2. Naturally, also other devices are feasible to guarantee that the lid part 3 is not lost from the bridge portion 2 when the lid part 3 has been loosen from the bridge portion 2.

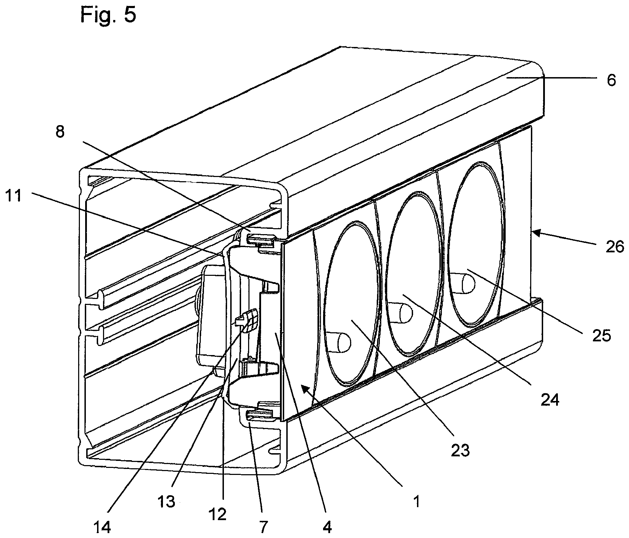

In Figure 5, a schematic view is shown of how two fixation devices 1, 26 have been installed in an installation duct 6. The two fixation devices 1, 26 span the longitudinal opening of the installation duct 6 in a cross-direction. The connecting portions 9, 10 of the fixation device 1 (see Figures 1, 2, 3) are attached to the edges 7, 8 of the installation duct 6 by the fact that the clamping elements 11, 12 clamp said fixation device 1 to said edges 7, 8 by a clamping force. The two fixation devices 1, 26 have been placed on either side of three sockets 23, 24, 25 arranged in a row. Naturally, the number of fixation devices 1, 26 may vary depending on which type of electrical device that is to be fixed, as well as depending on how many electrical devices that are to be fixed in a particular area of the installation duct 6.

## Claims

1. A fixation device (1) for fixing electrical devices in an installation duct, which fixation device (1) comprises a bridge portion (2), which bridge portion (2) is provided with connecting portions (9, 10) arranged to be detachably attachable to said installation duct, and that each connecting portion (9, 10) of the bridge portion (2) comprises clamping elements (11, 12) arranged to clamp the fixation device (1) to said installation duct by means of a clamping force, **characterized in that** the bridge portion (2) is constituted by a frame and **in that** the connecting portions (9, 10) having first ends which are provided with legs which legs attach the connecting portions (9, 10) to the frame and which legs extend perpendicularly from the frame and that the second ends of the connecting elements are formed with clamping elements (11, 12) which are interconnected by a resilient element (13) running basically parallel to the frame, which resilient element (13) can be brought toward the frame of the bridge portion (2).

2. Fixation device according to claim 1, **characterized in that** a projection (14) is arranged on a surface of said resilient element (13) that faces said bridge portion (2) so as to be able to reach said projection (14) by an elongate tool allowing withdrawal of said fixation device (1) from the installation duct.

3. Fixation device according to claim 2, **characterized in that** said projection (14) is T-shaped so as to be able to reach said projection (14) from more than one direction.

4. Fixation device according to claim 1, **characterized in that** it comprises a lid part (3) formed to be detachably attachable to said bridge portion (2).

5. Fixation device according to claim 4, **characterized in that** said lid part (3) is provided with legs (15, 16, 17, 18), which in the installed position are arranged to provide a frictional force between said legs (15, 16, 17, 18) and the edges (7, 8) of the installation duct.

6. Fixation device according to claim 4 or 5, **characterized in that** the lid part (3) comprises hitch elements (4, 5) in order to be attachable by snap action to said bridge portion (2).

7. Fixation device according to any one of claims 4-6, **characterized in that** the lid part (3) comprises an elongate element (19) intended to be detachably attachable to said bridge portion (2).

8. Fixation device according to claim 7, **characterized in that** said bridge portion (2) comprises a groove (22) and that said elongate element (19) can run in said groove (22).

9. Fixation device according to claim 7 or 8, **characterized in that** the free end of said elongate element (19) is provided with hooks (20, 21) so as to be able to detachably hook on the elongate element (19) to said bridge portion (2).

## Patentansprüche

1. Befestigungsvorrichtung (1) zum Fixieren von elektrischen Bauteilen in einem Kabelkanal, wobei die Befestigungsvorrichtung (1) einen Brückenabschnitt (2) umfasst, wobei der Brückenabschnitt (2) mit Verbindungsabschnitten (9, 10) versehen ist, die so angeordnet sind, dass sie auf lösbare Weise an dem Kabelkanal angebracht werden können, und dass jeder Verbindungsabschnitt (9, 10) des Brückenabschnitts (2) Klemmelemente (11, 12) umfasst, die so angeordnet sind, dass sie die Befestigungsvorrichtung (1) mittels einer Klemmkraft an dem Kabelkanal anklemmen, **dadurch gekennzeichnet, dass** der Brückenabschnitt (2) durch einen Rahmen gebildet ist und dass die Verbindungsabschnitte (9, 10) erste Enden aufweisen, die mit Beinen versehen sind, die die Verbindungsabschnitte (9, 10) an dem Rahmen anbringen und die sich rechtwinklig von dem Rahmen erstrecken, und dass die zweiten Enden der Verbindungselemente mit Klemmelementen (11, 12) ausgebildet sind, die durch ein federndes Element (13) miteinander verbunden sind, das im Wesentlichen parallel zu dem Rahmen verläuft, wobei das federnde Element (13) zu dem Rahmen des Brückenabschnitts (2) gebracht werden kann.

2. Befestigungsvorrichtung nach Anspruch 1, **dadurch gekennzeichnet, dass** ein Vorsprung (14) auf einer Fläche des federnden Elements (13) angeordnet ist, die dem Brückenabschnitt (2) zugewandt ist, so dass der Vorsprung (14) durch ein längliches Werkzeug erreicht werden kann, das eine Entfernung der Befestigungsvorrichtung (1) aus dem Kabelkanal ermöglicht.

3. Befestigungsvorrichtung nach Anspruch 2, **dadurch gekennzeichnet, dass** der Vorsprung (14) T-förmig ist, so dass der Vorsprung (14) aus mehr als einer Richtung erreicht werden kann.

4. Befestigungsvorrichtung nach Anspruch 1, **dadurch gekennzeichnet, dass** sie einen Deckelteil (3) umfasst, der so ausgebildet ist, dass er auf lösbare Weise an dem Brückenabschnitt (2) angebracht werden kann.

5. Befestigungsvorrichtung nach Anspruch 4, **dadurch gekennzeichnet, dass** der Deckelteil (3) mit Beinen (15, 16, 17, 18) versehen ist, die in der eingebauten Stellung so angeordnet sind, dass sie eine Reibkraft zwischen den Beinen (15, 16, 17, 18) und den Rändern (7, 8) des Kabelkanals bereitstellen.

6. Befestigungsvorrichtung nach Anspruch 4 oder 5, **dadurch gekennzeichnet, dass** der Deckelteil (3) Kupplungselemente (4, 5) umfasst, um über eine Schnappfunktion an dem Brückenabschnitt (2) anbringbar zu sein.

7. Befestigungsvorrichtung nach einem der Ansprüche 4 bis 6, **dadurch gekennzeichnet, dass** der Deckelteil (3) ein längliches Element (19) umfasst, das dazu bestimmt ist, auf lösbare Weise an dem Brückenabschnitt (2) anbringbar zu sein.

8. Befestigungsvorrichtung nach Anspruch 7, **dadurch gekennzeichnet, dass** der Brückenabschnitt (2) eine Nut (22) umfasst und dass das längliche Element (19) in der Nut (22) verlaufen kann.

9. Befestigungsvorrichtung nach Anspruch 7 oder 8, **dadurch gekennzeichnet, dass** das freie Ende des länglichen Elements (19) mit Haken (20, 21) versehen ist, so dass das längliche Element (19) an den Brückenabschnitt (2) auf lösbare Weise angehakt werden kann.

## Revendications

1. Dispositif de fixation (1) pour fixer des dispositifs électriques dans un conduit de câbles, ledit dispositif de fixation (1) comprenant une partie de pont (2), ladite partie de pont (2) étant pourvue de parties de connexion (9, 10) agencées de manière à pouvoir être attachées de façon détachable audit conduit de câbles, et chaque partie de connexion (9, 10) de la partie de pont (2) comprend des éléments de serrage (11, 12) agencés de manière à serrer le dispositif de fixation (1) sur ledit conduit de câbles en appliquant une force de serrage, **caractérisé en ce que** la partie de pont (2) est constituée par un cadre, et **en ce que** les parties de connexion (9, 10) présentent des premières extrémités qui sont pourvues de branches, lesdites branches attachant les parties de connexion (9, 10) au cadre, et lesdites branches s'étendent perpendiculairement à partir du cadre, et **en ce que** les secondes extrémités des éléments de connexion sont pourvues d'éléments de serrage (11, 12) qui sont interconnectés par un élément élastique (13) qui s'étend essentiellement parallèlement au cadre, ledit élément élastique (13) pouvant être amené en direction du cadre de la partie de pont (2).

2. Dispositif de fixation selon la revendication 1, **caractérisé en ce qu'**une saillie (14) est agencée sur une surface dudit élément élastique (13) qui fait face à ladite partie de pont (2) de manière à être capable d'atteindre ladite saillie (14) par un outil allongé qui permet le retrait dudit dispositif de fixation (1) du conduit de câbles.

3. Dispositif de fixation selon la revendication 2, **caractérisé en ce que** ladite saillie (14) est en forme de T de manière à être capable d'atteindre ladite saillie (14) à partir de plus d'une seule direction.

4. Dispositif de fixation selon la revendication 1, **caractérisé en ce qu'**il comprend une partie de couvercle (3) formée de manière à pouvoir être attachée de façon détachable à ladite partie de pont (2).

5. Dispositif de fixation selon la revendication 4, **caractérisé en ce que** ladite partie de couvercle (3) est pourvue de branches (15, 16, 17, 18) qui, dans la position installée, sont agencées de manière à générer une force de frottement entre lesdites branches (15, 16, 17, 18) et les bords (7, 8) du conduit de câbles.

6. Dispositif de fixation selon la revendication 4 ou 5, **caractérisé en ce que** la partie de couvercle (3) comprend des éléments d'accrochage (4, 5) de telle sorte qu'il puisse être attaché à ladite partie de pont (2) par une action d'emboîtement.

7. Dispositif de fixation selon l'une des revendications 4 à 6, **caractérisé en ce que** la partie de couvercle (3) comprend un élément allongé (19) qui est destiné à être attaché de façon détachable à ladite partie de pont (2).

8. Dispositif de fixation selon la revendication 7, **caractérisé en ce que** ladite partie de pont (2) comporte une rainure (22), et **en ce que** ledit élément allongé (19) peut s'étendre dans ladite rainure (22).

9. Dispositif de fixation selon la revendication 7 ou 8, **caractérisé en ce que** l'extrémité libre dudit élément allongé (19) comporte des crochets (20, 21) de telle sorte que l'élément allongé (19) puisse être accroché de façon détachable à ladite partie de pont (2).
